# EUROPÄISCHE PATENTSCHRIFT

(11) **EP 1 696 168 B1**
(45) Veröffentlichungstag und Bekanntmachung des Hinweises auf die Patenterteilung: **07.05.2008**
(21) Anmeldenummer: 06003520.1
(22) Anmeldetag: 21.02.2006
(51) Int. Cl.: F16L 59/02

(54) **Als Fertigbauteil ausgebildetes Dämmstoffelement für die Aufnahme eines Schornsteinrohres oder dergleichen**
Prefabricated insulated element for the reception of a chimney pipe or the like
Elément isolant préfabriqué pour la réception d'un tuyau de cheminée ou similaire

(30) Priorität: 25.02.2005 DE 102005008761
(43) Veröffentlichungstag der Anmeldung: 30.08.2006
(73) Patentinhaber: SAINT-GOBAIN ISOVER G+H AG, 67059 Ludwigshafen (DE)
(72) Erfinder: Bissinger, Claus, Dr., 67271 Kleinkarlbach (DE); Albrecht, Volker, 67360 Lingenfeld (DE)
(74) Vertreter: Bockhorni & Kollegen

(56) Entgegenhaltungen:
- DE-A1- 4 106 835
- FR-A- 2 588 595

## Beschreibung

Die Erfindung betrifft ein als Fertigbauteil ausgebildetes Dämmstoffelement gemäß dem Oberbegriff des Patentanspruches 1.

Ein solches Dämmstoffelement ist aus FR-A-2 588 595 bekannt.

Für die Durchführung von Schornsteinrohren aus Stahlblech aber auch aus anderen Materialien, etwa Schamotte, durch Mauerwerk oder Gefache, wie Wänden, Geschoßdecken und dergleichen wird das Schornsteinrohr in der gewünschten Ausrichtung in der Mauerwerksöffnung fixiert und dann üblicherweise Stopfwolle aus Mineralwolle verwendet, um den Zwischenraum zwischen dem Außenumfang des Schornsteinrohres und der Mauerwerksöffnung entsprechend abzudichten. Diese Praxis hat sich durchaus bewährt, ist aber umständlich und hat ferner den Nachteil, dass je nach Ausführung durch den Handwerker eine mehr oder weniger vollständige Füllung und damit ausreichende Dämmung erzielt wird.

Aufgabe der Erfindung ist es, ein Dämmstoffelement zu schaffen, welches als Fertigteil für die Aufnahme eines Schornsteinrohres verwendbar ist und dabei insbesondere die Möglichkeit bietet, dass es universell für die Aufnahme von Schornsteinrohren mit unterschiedlichen Durchmessern verwendbar ist.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung sind innerhalb des Dämmstoffelements mehrere Kernelemente vorgesehen und zwar in einer ineinander geschachtelten Anordnung, welche herausnehmbar oder heraustrennbar innerhalb des Dämmstoffelements aufgenommen sind und mit ihrer Innen- und/oder Außenkontur mehrere Aufnahmeöffnungen mit jeweils unterschiedlichen Öffnungsquerschnitten begrenzen. Im Falle von beispielsweise drei ineinander geschachtelten Kernelementen wird bei Herausnahme des innersten Kernelements eine Aufnahmeöffnung für ein Schornsteinrohr mit einem geringeren Durchmesser geschaffen. Das selbe Dämmstoffelement kann jedoch auch für das Verlegen von Schornsteinrohren mit größerem Durchmesser verwendet werden, indem beispielsweise auch das zwischenliegende oder äußerste Kernelement herausgenommen oder herausgetrennt wird. Dadurch ist das Dämmstoffelement für die Verlegung von Schornsteinrohren mit unterschiedlichen Durchmessern ausgelegt. Dadurch, dass das Dämmstoffelement blockartig ausgebildet und vorzugsweise als Einsetzteil hergerichtet ist, kann es mühelos in entsprechenden Mauerwerksdurchbrüchen verlegt werden. Die Beigabe von Stopfwolle ist damit nicht mehr erforderlich. Dadurch dass das Dämmstoffelement als Fertigbauelement gewährleistet ist, werden gleichbleibende Bedingungen bezüglich Dämmfähigkeit und dergleichen über das gesamte Dämmstoffelement sichergestellt, d. h. die Eigenschaften des Dämmstoffelements können vom Handwerker nicht mehr beeinflusst werden, wie es im Falle der manuell eingebrachten Stopfwolle gegeben ist. Zweckmäßigerweise sind hierbei die Kernelemente konzentrisch angeordnet, so dass auch die Aufnahmeöffnungen konzentrisch sind. Damit kann in einfacher Weise sichergestellt werden, dass beispielsweise Schornsteinrohre mit unterschiedlichem Durchmesser jeweils zentral innerhalb des Dämmstoffelements angeordnet und somit auch innerhalb der geeignet aufbereiteten Mauerwerksöffnung exakt positioniert sind.

Zweckmäßigerweise füllen die Kernelemente in ineinander geschachtelter Stellung das Dämmstoffelement im Wesentlichen bis auf die minimal gehaltenen Trennschnitte vollständig aus. Dadurch ist sichergestellt, dass dann, wenn beispielsweise das innerste Kernelement entfernt wird, jedenfalls eine einwandfreie Dämmung im übrigen Bereich des Dämmstoffelements gewährleistet ist. In diesem Zusammenhang ist auch auszuführen, dass bei Bedarf auch auf das innerste Kernelement verzichtet werden kann, da die Aufnahmeöffnung mit dem geringsten Durchmesser durch die Innenkontur des nächstfolgenden Kernelements gebildet bzw. begrenzt ist. Allerdings ist es zweckmäßig, wenn das Dämmstoffelement auch mit dem innersten Kernelement zur Verfügung gestellt wird, da dann die Dämmstoffelemente bereits in vorgefertigte Mauerdurchbrüche für spätere Verwendungszwecke eingesetzt werden können, also für eine ausreichende Wärmedämmung des Bauwerks gesorgt wird und keine Kältebrücken entstehen können. Bei Bedarf kann dann zu einem späteren Zeitpunkt das Schornsteinrohr über dieses Dämmstoffelement verlegt werden. Insbesondere in diesem Zusammenhang ist es zweckmäßig, entsprechende Stirnflächen des Dämmstoffelements mit einer putzaffinen Trägerschicht zu beschichten, etwa mit Wasserglas. Die Beschichtung wird zweckmäßigerweise in die oberflächenseitige Grenzschicht eingetragen, etwa eingewalkt. Dadurch ergibt sich eine gute Haftung für einen Putzauftrag.

Im bevorzugten Ausführungsbeispiel sind die Aufnahmeöffnungen kreisrund entsprechend der üblichen Bauweise der Schornsteinrohre, jedoch liegt es auch im Rahmen der Erfindung bei Bedarf die Aufnahmeöffnung entsprechend auch oval oder eckig auszuführen, wenn hierzu schornsteinrohrseitig entsprechende Vorgaben zu erfüllen sind, dieses also mit einem unrunden Querschnitt vorliegt.

In besonders zweckmäßiger Weise werden im Dämmstoffelement drei Kernelemente verwendet, da üblicherweise auf dem Bau mit drei unterschiedlichen Durchmessern bezüglich der Schornsteinrohre gearbeitet wird.

In besonders zweckmäßiger Weise werden die Kernelemente aus dem Vollen des Dämmstoffelements herausgearbeitet und zwar durch Einbringen von Trennschnitten, wozu beispielsweise eine dünne Bandsäge oder dergleichen verwendet werden kann. In diesem Zusammenhang ist es zweckmäßig, wenn die umfangsmäßigen Trennschnitte zur Bildung der Kernelemente bezüglich der beiden äußersten Kernelemente nicht vollständig über den Umfang geführt werden, sondern mindestens eine vergleichsweise schmale trennschnittfreie Zone in Art von Haltestegen verbleibt, so dass die Kernelemente sozusagen transportgesichert gehalten sind. Es bedarf dann für den Gebrauch lediglich entsprechender kleiner Trennschnitte, die ohne weiteres vor Ort durch den Handwerker unter Zuhilfenahme etwa eines Messers vorgenommen werden können. In diesem Zusammenhang ist es zweckmäßig, wenn im Bereich der trennschnittfreien Zone der zu führende Schnitt durch entsprechend Markierungslinien verdeutlicht wird. Hierbei ist es zweckmäßig, wenn optische Markierungslinien verwendet werden, die sich beispielsweise in einfacher Weise durch Heißluftdüsen oder Farbauftrag erzeugen lassen.

In einer weiteren vorteilhaften Ausführungsform der Erfindung ist das Dämmstoffelement mittig geteilt und zwar in zwei Dämmstoffelementhälften, wobei die Kernelemente als Kernelementhälften ausgebildet und jeweils in den Dämmstoffhälften aufgenommen bzw. angeordnet sind. Nach Zusammensetzen der beiden Rohlingshälften zum Dämmstoffelement ergänzen sich die Kernelementhälften zu den Kernelementen. Im Falle von ineinander geschachtelten ringartigen und kreisförmigen Kernelementen sind die Kernelementhälften jeweils mit halbringförmigem bzw. halbkreisförmigem Querschnitt ausgebildet. Diese Ausführungsform zeichnet sich durch fertigungstechnische Vorteile aus.

Zweckmäßigerweise wird als Material Steinwolle für das Dämmstoffmaterial verwendet. Es eignet sich aber insbesondere auch Mineralwolle, die in einem physiologischen Milieu löslich ist. Eine geeignete Zusammensetzung hierfür ist wie folgt:

| | | | |
|---|---|---|---|
| SiO₂ | 39 - 55 % | vorzugsweise | 40 - 52 % |
| Al₂O₃ | 16 - 27 % | vorzugsweise | 16 - 26 % |
| CaO | 9,5 - 20 % | vorzugsweise | 10 - 18 % |
| MgO | 1 - 5 % | vorzugsweise | 1 - 4,9 % |
| Na₂O | 0 - 15 % | vorzugsweise | 2 - 12 % |
| K₂O | 0 - 15 % | vorzugsweise | 2 - 12 % |
| R₂O (Na₂O + K₂O) | 10 - 14,7 % | vorzugsweise | 10 - 13,5 % |
| P₂O₅ | 0 - 3 % | insbesondere | 0 - 2 % |
| Fe₂O₃ (Eisen gesamt) | 1,5 - 15 % | insbesondere | 3,2 - 8 % |
| B₂O₃ | 0 - 2 % | vorzugsweise | 0-1 % |
| TiO₂ | 0 - 2 % | vorzugsweise | 0,4 -1 % |
| Sonstiges | 0 - 2,0 % | | |

In Zusammenhang mit Mineralwolle, die in physiologischem Milieu löslich ist, weist die Zusammensetzung der Mineralfasern ein Alkali/Erdalkali-Massenverhältnis < 1 auf und ist die Faserstruktur des Dämmelements bestimmt durch einen mittleren geometrischen Faserdurchmesser < = 4 µm.

Die Rohdichte der Dämmstoffelemente liegt zweckmäßigerweise im Bereich von 60 bis 140 kg/m³ und beträgt insbesondere ≥80 kg/m³.

Die Erfindung betrifft ferner ein System zur Dämmung von Schornsteinrohrdurchführungen durch Öffnungen oder Durchbrüche in Wänden, Decke oder sonstigem Mauerwerk oder Gefachen unter Anwendung eines blockartigen Dämmstoffelements zur Ausfüllung der Öffnungen oder Durchbrüche und zur Aufnahme eines Schornsteinrohres, wobei das Dämmstoffelement gemäß Merkmalen aus den Ansprüchen 1 bis 20 ausgebildet sein kann.

Neben der dämmenden Wirkung und der mechanischen Fixierung im Verbund mit den handhabungstechnischen Vorteilen ermöglicht das erfindungsgemäße Dämmelement zusätzlich eine schalltechnische Entkopplung des Schornsteinrohres von dem Rest des Gebäudes, indem insbesondere niederfrequente Vibrationen an der Ausbreitung in die an ein Dämmelement angrenzenden Mauerwerk- oder Gefachteile gehindert sind.

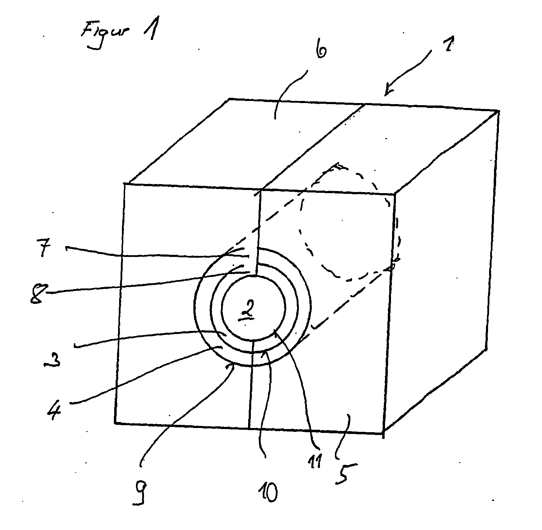

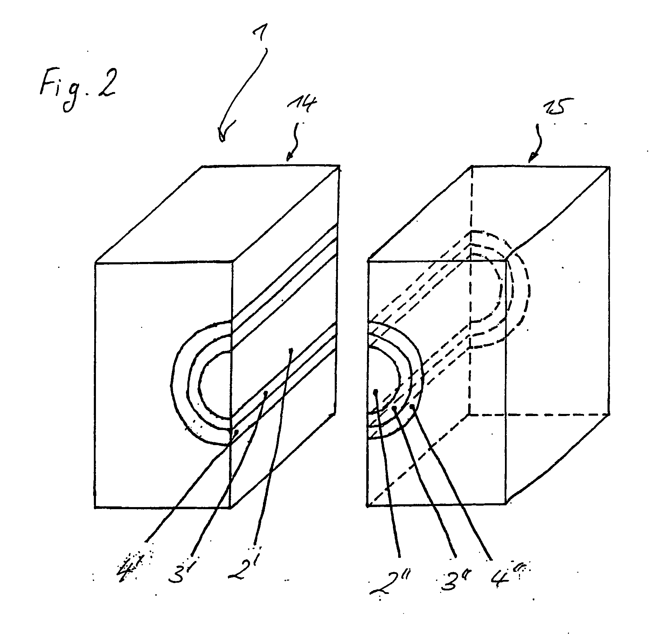

Nachfolgend werden bevorzugte Ausführungsbeispiele der Erfindung anhand der Figur 1 und 2 beschrieben, welche jeweils eine perspektivische Ansicht eines Dämmstoffelements zeigen.

In der Figur 1 ist mit 1 ein blockartig ausgebildetes Dämmstöffelement dargestellt, welches im dargestellten Ausführungsbeispiel als Quader mit Rechteckquerschnitt und zwar beispielshalber mit einer Länge und Breite von 600 mm und einer Tiefe von 240 mm ausgelegt ist. Dieses Dämmstoffelement 1 dient zur Aufnahme eines Schornsteinrohres, welches in einer Öffnung eines Mauerwerks, insbesondere einer Wand, Geschoßdecke oder Boden anzuordnen ist. Üblicherweise sind derartige Schornsteinrohre aus Blech gebildet. Das in der Figur 1 dargestellte Dämmstoffelement 1 ist hierbei so ausgelegt, dass mit ein- und demselben Dämmstoffelement Schornsteinrohre mit unterschiedlichem Durchmesser verlegt werden können. Üblicherweise werden Schornsteinrohre mit Durchmessern von 130 mm, 150 mm und 180 mm verwendet, die aufgrund der nachfolgend noch beschriebenen Ausbildung des Dämmstoffelements 1 verlegt werden können.

Hierzu ist das Dämmstoffelement 1 mit drei im Inneren des Dämmstoffelements ausgebildeten Kernelementen 2, 3 und 4 ausgebildet. Diese Kernelemente 2 bis 4 sind ineinander geschachtelt innerhalb des Dämmstoffelements 1 angeordnet und erstrecken sich, wie strichliert für das äußere Kernelement 4 dargestellt ist, von der vorderen Hauptfläche 5 durchgehend bis zur Rückseite. Im dargestellten Ausführungsbeispiel bilden die äußeren Kernelemente 3 und 4 somit zylinderförmige Körper, die sich von der vorderen Hauptfläche 5 bis zur hinteren Hauptfläche durchgehend erstrecken und kreisringförmigen Querschnitt aufweisen. Das innerste Kernelement 2 ist als Vollzylinder, also als Zylinder mit kreisrundem Querschnitt ausgebildet.

Erzeugt werden die Zylinder durch Trennschnitte aus dem vollen Material des quaderförmigen Dämmstoffelements 1 und zwar durch beispielsweise eine Bandsäge. Diese wird beispielsweise von der oberen Hauptfläche 6 her eingeführt, wobei der Schnitt sich von oben bis zum Material des vollzylindrischen Kernelements 2 erstreckt. Ferner werden die Trennschnitte über den Umfang geführt, so dass nacheinander die konzentrischen Kernelemente 3 und 4 sowie schließlich das vollzylindrische Kernelement 2 herausgeschnitten werden. Es versteht sich von selbst, dass die Schnitte materialschonend und mit möglichst minimalem Trennspalt geführt werden.

Wie aus der Figur 1 ersichtlich ist, werden im dargestellten Ausführungsbeispiel die beiden äußeren umfangsmäßigen Trennschnitte zur Herausarbeitung der Kernelemente 3 und 4 nicht über den gesamten Umfang geführt, vielmehr bleiben stegartige Abschnitte 7 und 8 trennschnittfrei. In der zeichnerischen Darstellung sind diese zur besseren Darstellung breiter ausgeführt. In der Praxis besitzen diese trennschnittfreien Haltestege 7 und 8 nur Haltefunktion und erstrecken sich umfangsmäßig nur über eine Länge von etwa 10 bis 20 mm. Durch diese Haltestege 7 und 8 haften die im übrigen voll ausgetrennten Kernelemente 3 und 4 zur Sicherung auf dem Transportwege am Dämmstoffelement 1 und können also beim Transport nicht herausfallen.

Ersichtlich begrenzen die Kernelemente 2 bis 4 drei Aufnahmeöffnungen innerhalb des Dämmstoffelements mit ihren Innen- und/oder Außenkonturen. Im einzelnen begrenzt die Außenkontur des Kernelements 4, also des äußeren Kernelements eine mit 9 bezeichnete Aufnahmeöffnung mit größtem Durchmesser, hier beispielsweise mit einem Durchmesser von 180 mm für die Verlegung eines Schornsteinrohres mit einem Durchmesser von 180 mm. Die Innenkontur dieses äußersten Kernelements 4 begrenzt bzw. bildet eine Aufnahmeöffnung 10 aus, sobald die innersten Kernelemente 2 und 3 herausgenommen sind. Das mittlere Kernelement 3 begrenzt mit seiner Außenkontur die Aufnahmeöffnung 10 und bildet mit seiner Innenkontur die mit 11 bezeichnete Aufnahmeöffnung aus, wenn das innere Kernelement 2 herausgenommen wird. Der Durchmesser der mittleren Aufnahmeöffnung 10 möge im dargestellten Ausführungsbeispiel 150 mm und der Durchmesser der Aufnahmeöffnung 11 möge im dargestellten Ausführungsbeispiel 130 mm betragen. Mit ein- und demselben Dämmstoffelement können je nach Herausnahme der Kernelemente somit Schornsteinrohre von 130, 150 und 180 mm über das Dämmstoffelement 1 in entsprechenden Mauerwerkdurchbrüchen verlegt werden.

Im dargestellten Ausführungsbeispiel sind die Trennschnitte so geführt, dass sie sich ausgehend vom innersten Kernelement 2 nach oben zur Hauptfläche 6 aber auch nach unten zur nicht dargestellten gegenüberliegenden Hauptfläche erstrecken, so dass das Dämmstoffelement 1 sozusagen in zwei Halbelementen, nämlich einem links und einem rechts dargestellten Halbelement vorliegt. Für den Gebrauch kann somit das rechte Halbelement abgenommen werden, um das innerste Kernelement 2 und je nach Bedarf auch das mittlere oder das äußerste Kernelement 3 bzw. 4 herauszunehmen, je nach dem, ob ein größeres oder kleineres Schornsteinrohr verlegt werden soll. Nach Abnahme des rechts dargestellten Halbelements kann der Trennschnitt im Bereich der trennschnittfreien Haltestege mit einem Messer oder dergleichen vom Handwerker ohne weiteres vorgenommen werden. Hierzu ist es zweckmäßig, dass die trennschnittfreie Zone durch Markierungen gekennzeichnet wird, die sich beispielsweise über die Länge des Zylinders erstrecken können und zweckmäßigerweise durch Heißblasdüsen aufgebracht sind. Dies erleichtert das Handling und den Gebrauch des Dämmstoffelements.

Festzuhalten ist ferner, dass die trennschnittfreien Haltestege nur als Transportsicherung vorgesehen sind und selbstverständlich auch entfallen können, so dass die Trennschnitte auch über den gesamten Umfang der Kernelemente vorgenommen werden können. Da die Trennschnitte mit einem sehr dünnen Bandsägeblatt vorgenommen werden, welches nur wenig Material herausarbeitet, verbleiben nur minimale Trennspalte, die zweckmäßigerweise eine Größe < 1 mm betragen können. Als Material für das Dämmstoffelement 1, welches hitzebeständig sein soll, eignet sich Steinwolle. Insbesondere ist aber auch hitzebeständige Mineralwolle mit biolöslichen Eigenschaften zweckmäßig. Das in der Figur dargestellte Dämmstoffelement weist eine Rohdichte von 100 kg/m³ auf und der Bindemittelanteil (trocken) beträgt 2,5 %. Ein derartiges Dämmstoffelement erfüllt somit auch die Bedingungen der Brandschutzklasse F90 (gemäß DIN-Norm). Ersichtlich kann das Dämmstoffelement 1 als Block in eine entsprechende Mauerdurchbruchsöffnung eingesetzt werden ohne dass ein Zustopfen mit Stopfwolle erforderlich wäre.

Das in Fig. 1 dargestellte Dämmstoffelement 1 ist ein Fertigbauteil, welches auch als Monoblock, also nur mit einem Trennschnitt von der Hauptfläche 6 her hergestellt sein kann. Ebenso ist auch ein Mehrschichtaufbau denkbar, wie anhand eines bevorzugten Ausführungsbeispiels in Fig. 2 dargestellt ist. Das Dämmstoffelement 1 nach Fig. 2 ist gleichfalls blockartig aufgebaut und kann dieselben Abmessungen wie das Ausführungsbeispiel nach Fig. 1 aufweisen, also Länge und Breite jeweils 600 mm und Tiefe 240 mm (als rein beispielhafte Angaben). Nach der Ausführungsform nach Fig. 2 ist jedoch das Dämmstoffelement aus zwei separaten Rohlingshälften 14 und 15 aufgebaut, die gleich ausgebildet sind und zusammengesetzt das Dämmstoffelement 1 bilden. Auch dieses Dämmstoffelement 1 weist drei ineinander geschachtelte Kernelemente 2 bis 4 auf, die sich aus entsprechenden Kernelementhälften 2', 3', 4' und 2*' ',* 3*' '* und 4*' '* zusammensetzen. Hierbei sind die Kernelementhälften 2', 3' und 4' in der Rohlingshälfte 14 angeordnet bzw. ausgebildet und die Kernelementhälften 2 ", 3 " und 4" in der Rohlingshälfte 15. Diese Ausführungsform hat fertigungstechnische Vorteile, da sich infolge der geteilten Ausführung des Dämmstoffelements in zwei Dämmstoffelementhälften die Kernelemente leichter herausarbeiten lassen, was wiederum durch entsprechende Schnittführung erfolgt. Für den Transport ist es möglich, die beiden Dämmstoffhälften durch ein Folienband oder dgl. zum blockartigen Dämmstoffelement festzuhalten. Zusätzlich kann bei Bedarf auch eine Transportsicherung dadurch erfolgen, dass in gleicher Weise wie bei der Ausführungsform nach Fig. 1 entsprechende Haltestege im Trennschnittbereich der Kernelementhälften verbleiben, so etwa an der Grenzfläche der beiden Rohlingshälften, an der sie zusammengesetzt werden. Für die Montage des Schornsteinrohres lassen sich die entsprechenden Kernelemente leicht herausnehmen und nach Zusammensetzen der beiden Rohlingshälften kann das Dämmstoffelement in einfacher Weise in einem Mauerdurchbruch montiert werden.

In den dargestellten Ausführungsbeispielen beträgt die Tiefe des Dämmstoffelements bzw. die Tiefe der Dämmstoffelementhälften 240 mm, wobei hier die Tiefe auf das Baurichtmaß von 250 mm ausgerichtet ist und zwar unter Berücksichtigung eines Putzauftrags. Selbstverständlich ist die Erfindung auf diese Tiefe nicht festgelegt, vielmehr kann das Dämmstoffelement auch mit anderen Abmessungen in Bezug auf Tiefe, Länge und Breite hergestellt sein. Sollen größere Mauerdicken überbrückt werden, können auch mehrere Dämmstoffelemente hintereinander in eine Durchbruchsöffnung modulartig eingesetzt werden.

## Patentansprüche

1. Als Fertigbauteil ausgebildetes Dämmstoffelement (1) aus hitzebeständigem Material, insbesondere Mineralwolle, mit mindestens einer jeweils längs einer geradlinigen Achse durch das Dämmstoffelement (1) hindurchgehenden Aufnahmeöffnung für die Aufnahme eines Schornsteinrohres oder dergleichen, wobei das Dämmstoffelement als Einsetzteil in eine Wand- oder Deckenöffnung oder eines sonstigen Mauerwerk- oder Gefachdurchbruchs ausgebildet ist,
**dadurch gekennzeichnet, dass**
das blockartig ausgebildete Dämmstoffelement (1) mit mehreren ineinander geschachtelt angeordneten Kernelementen (2 bis 4) versehen ist, welche herausnehmbar oder heraustrennbar innerhalb des Dämmstoffelements (1) angeordnet sind und mit ihren Innen- und/oder Außenkonturen mehrere Aufnahmeöffnungen (9 bis 11) mit jeweils unterschiedlichen Öffnungsquerschnitten begrenzen.

2. Dämmstoffelement nach Anspruch 1,
**dadurch gekennzeichnet, dass**
die durch die Kernelemente (2 bis 4) begrenzten Aufnahmeöffnungen (9 bis 11) konzentrisch zueinander angeordnet sind.

3. Dämmstoffelement nach Anspruch 1 oder 2,
**dadurch gekennzeichnet, dass**
die Kernelemente (2 bis 4) so ausgebildet sind, dass sie in ineinander geschachtelter Stellung das Dämmstoffelement (1) im Wesentlichen vollständig füllen.

4. Dämmstoffelement nach einem der vorhergehenden Ansprüche,
**dadurch gekennzeichnet, dass**
die Öffnungsquerschnitte der Aufnahmeöffnungen (9 bis 11) kreisrund und die Kernelemente (2 bis 4) mit entsprechend kreisrunder Innen- und/oder Außenkontur gebildet sind.

5. Dämmstoffelement nach einem der vorhergehenden Ansprüche,
**dadurch gekennzeichnet, dass**
drei Kernelemente (2 bis 4) zur Begrenzung von drei Aufnahmeöffnungen (9 bis 11) mit unterschiedlichem Durchmesser vorgesehen sind, von denen die beiden äußeren Kernelemente (3, 4) als Zylinder mit kreisringförmigen Querschnitt und das innerste Kernelement (2) als Vollzylinder mit kreisrundem Querschnitt ausgebildet ist.

6. Dämmstoffelement nach einem der vorhergehenden Ansprüche,
**dadurch gekennzeichnet, dass**
die Kernelemente (2 bis 4) durch Trennschnitte untereinander oder gegenüber dem Dämmstoffelement (1) getrennt sind.

7. Dämmstoffelement nach Anspruch 6,
**dadurch gekennzeichnet, dass**
die Trennschnitte der äußeren Kernelemente (3, 4) über einen wesentlichen Umfang der Kernelemente bis auf mindestens einen stegartigen trennschnittfreien Halteabschnitt (7, 8) geführt sind.

8. Dämmstoffelement nach Anspruch 6 oder 7
**dadurch gekennzeichnet, dass**
der Trennschnitt des innersten Kernelements (2) über den gesamten Umfang des Kernelements geführt ist.

9. Dämmstoffelement nach einem der Ansprüche 6 bis 8,
**dadurch gekennzeichnet, dass**
die Trennschnitte beidseits der Kernelemente (2 bis 4) so geführt sind, dass das Dämmstoffelement in zwei Halbelemente geteilt ist.

10. Dämmstoffelement nach einem der Ansprüche 6 bis 9,
**dadurch gekennzeichnet, dass**
die Trennschnitte durch Sägen oder Schneiden eingebracht sind.

11. Dämmstoffelement nach einem der Ansprüche 6 bis 10,
**dadurch gekennzeichnet, dass**
die trennschnittfreien Halteabschnitte (7, 8) durch Markierungen, vorzugsweise optische und insbesondere durch Wärmebeaufschlagung erzeugte Markierungen gekennzeichnet sind.

12. Dämmstoffelement nach einem der vorhergehenden Ansprüche,
**dadurch gekennzeichnet, dass**
die Kernelemente zentral im Dämmstoffelement ausgebildet sind.

13. Dämmstoffelement nach einem der vorhergehenden Ansprüche,
**dadurch gekennzeichnet, dass**
das Dämmstoffelement (1) aus Steinwolle gebildet ist.

14. Dämmstoffelement nach einem der Ansprüche 1 bis 12,
**dadurch gekennzeichnet, dass**
dieses aus in einem physiologischen Milieu löslichen Mineralfasern mit folgender chemischer Zusammensetzung in Gewichtsprozent gebildet ist:
| | | | | | |
|---|---|---|---|---|---|
| SiO₂ | 39-55 | % | vorzugsweise | 40-52 | % |
| Al₂O₃ | 16-27 | % | vorzugsweise | 16-26 | % |
| CaO | 9,5-20 | % | vorzugsweise | 10-18 | % |
| MgO | 1-5 | % | vorzugsweise | 1-4,9 | % |
| Na₂O | 0-15 | % | vorzugsweise | 2-12 | % |
| K₂O | 0-15 | % | vorzugsweise | 2-12 | % |
| R₂O(Na₂O + K₂O) | 10-14,7 | % | vorzugsweise | 10-13,5 | % |
| P₂O₅ | 0-3 | % | insbesondere | 0-2 | % |
| Fe₂O₃ (Eisen gesamt) | 1,5-15 | % | insbesondere | 3,2-8 | % |
| B₂O₃ | 0-2 | % | vorzugsweise | 0 - 1 | % |
| TiO₂ | 0-2 | % | vorzugsweise | 0,4 - 1 | % |
| Sonstiges | 0 - 2,0 | % | | | |

15. Dämmstoffelement nach einem der vorhergehenden Ansprüche,
**dadurch gekennzeichnet, dass**
die Rohdichte des Dämmstoffelements einschließlich der Kernelemente (2 bis 4) im Bereich von 60 bis 140 kg/m³ liegt, vorzugsweise größer/gleich 80 kg/m³ ist.

16. Dämmstoffelement nach einem der vorhergehenden Ansprüche,
**dadurch gekennzeichnet, dass**
der Bindemittelgehalt (trocken) kleiner 3,5 %, vorzugsweise kleiner 2,5 % beträgt.

17. Dämmstoffelement nach einem der vorhergehenden Ansprüche,
**dadurch gekennzeichnet, dass**
die Aufnahmeöffnungen einen Durchmesser von 130, 150 und 180 mm auf weisen.

18. Dämmstoffelement nach einem der vorhergehenden Ansprüche,
**dadurch gekennzeichnet, dass**
das Dämmstoffelement (1) als quaderförmiger Block ausgebildet ist.

19. Dämmstoffelement nach einem der vorhergehenden Ansprüche,
**dadurch gekennzeichnet, dass**
das Dämmstoffelement (1) aus zwei Dämmstoffelementhälften (1', 1 ") auf gebaut ist, in denen die Kernelemente (2 bis 4) jeweils als Kernelementhälften (2', 3', 4'; 2", 3", 4") ausgebildet sind.

20. Dämmstoffelement nach einem der vorhergehenden Ansprüche,
**dadurch gekennzeichnet, dass**
die Stirnflächen des Dämmstoffelements (1) mit einer putzaffinen Trägerschicht versehen sind.

21. System zur Dämmung von Schornsteinrohrdurchführungen durch Öffnungen oder Durchbrüchen in Wänden, Decken oder sonstigem Mauerwerk oder Gefachen, mit einem blockartigen Dämmstoffelement (1) gemäß einem der vorhergehenden Ansprüche.

## Claims

1. Prefabricated insulating element (1) made of heat-resistant material, in particular mineral wool, having at least one receiving opening, which passes through the insulating element (1) respectively along a rectilinear axis, for receiving a chimney pipe or the like, the insulating element being configured as a part to be inserted in a wall or ceiling opening or some other masonry or framed wall opening,
**characterised in that**
the insulating element (1) which has a block-like configuration is provided with a plurality of core elements (2 to 4) which are disposed interleaved in each other, said core elements being disposed within the insulating element (1) so as to be removable or separable and, with their inner and/or outer contours, delimiting a plurality of receiving openings (9 to 11) with respectively different opening cross-sections.

2. Insulating element according to claim 1,
**characterised in that**
the receiving openings (9 to 11) which are delimited by the core elements (2 to 4) are disposed concentrically relative to each other.

3. Insulating element according to claim 1 or 2,
**characterised in that**
the core elements (2 to 4) are configured such that they essentially completely fill the insulating element (1) in the position interleaved in each other.

4. Insulating element according to one of the preceding claims,
**characterised in that**
the opening cross-sections of the receiving openings (9 to 11) are circular and the core elements (2 to 4) are formed with a correspondingly circular inner and/or outer contour.

5. Insulating element according to one of the preceding claims,
**characterised in that**
three core elements (2 to 4) are provided in order to delimit three receiving openings (9 to 11) with a different diameter, the two outer core elements (3, 4) of which are configured as a cylinder with a circular cross-section and the innermost core element (2) as a full cylinder with a circular cross-section.

6. Insulating element according to one of the preceding claims,
**characterised in that**
the core elements (2 to 4) are separated from each other or relative to the insulating element (1) by parting cuts.

7. Insulating element according to claim 6,
**characterised in that**
the parting cuts of the outer core elements (3, 4) are guided over a substantial circumference of the core elements apart from at least one web-like parting cut-free retaining portion (7, 8).

8. Insulating element according to claim 6 or 7,
**characterised in that**
the parting cut of the innermost core element (2) is guided over the entire circumference of the core element.

9. Insulating element according to one of the claims 6 to 8,
**characterised in that**
the parting cuts are guided on both sides of the core elements (2 to 4) such that the insulating element is divided into two half elements.

10. Insulating element according to one of the claims 6 to 9,
**characterised in that**
the parting cuts are introduced by sawing or cutting.

11. Insulating element according to one of the claims 6 to 10,
**characterised in that**
the parting cut-free retaining portions (7, 8) are **characterised by** markings, preferably optical markings and in particular ones produced by heat impingement.

12. Insulating element according to one of the preceding claims,
**characterised in that**
the core elements are configured centrally in the insulating element.

13. Insulating element according to one of the preceding claims,
**characterised in that**
the insulating element (1) is formed from rock wool.

14. Insulating element according to one of the claims 1 to 12,
**characterised in that**
the latter is formed from mineral fibres which are soluble in a physiological medium with the following chemical composition in percentage by weight:
| | | | |
|---|---|---|---|
| SiO₂ | 39 - 55% | preferably | 40 - 52% |
| Al₂O₃ | 16 - 27% | preferably | 16 - 26% |
| CaO | 9.5 - 20% | preferably | 10 - 18% |
| MgO | 1 - 5% | preferably | 1 - 4.9% |
| Na₂O | 0 - 15% | preferably | 2-12% |
| K₂O | 0-15% | preferably | 2 - 12% |
| R₂O(Na₂O+K₂O) | 10 - 14.7% | preferably | 10 - 13.5% |
| P₂O₅ | 0-3% | particularly | 0 - 2% |
| Fe₂O₃ (Total iron) | 1.5 - 15% | particularly | 3.2-8% |
| B₂O₃ | 0 - 2% | preferably | 0 - 1% |
| TiO₂ | 0 - 2% | preferably | 0.4-1% |
| Other | 0 - 2.0% | | |

15. Insulating element according to one of the preceding claims,
**characterised in that**
the bulk density of the insulating element including the core elements (2 to 4) is in the range of 60 to 140 kg/m³, preferably is greater than/equal to 80 kg/m³.

16. Insulating element according to one of the preceding claims,
**characterised in that**
the binder content (dry) is less than 3.5%, preferably less than 2.5%.

17. Insulating element according to one of the preceding claims,
**characterised in that**
the receiving openings have a diameter of 130, 150 and 180 mm.

18. Insulating element according to one of the preceding claims,
**characterised in that**
the insulating element (1) is configured as a cuboid block.

19. Insulating element according to one of the preceding claims,
**characterised in that**
the insulating element (1) is constructed from two insulating element halves (1', 1") in which the core elements (2 to 4) are configured respectively as core element halves (2', 3', 4'; 2", 3", 4").

20. Insulating element according to one of the preceding claims,
**characterised in that**
the end faces of the insulating element (1) are provided with a plaster-compatible carrier layer.

21. System for insulating chimney pipe leadthroughs through openings or breakthroughs in walls, ceilings or some other masonry or framed walls, having a block-like insulating element (1) according to one of the preceding claims.

## Revendications

1. Élément isolant (1) conçu sous forme d'élément préfabriqué à partir d'un matériau résistant à la chaleur, en particulier de laine minérale, comprenant au moins une ouverture de réception traversant l'élément isolant (1) le long d'un axe linéaire, destinée à réceptionner un tuyau de cheminée ou analogue, dans lequel l'élément isolant est conçu sous forme d'élément d'insertion dans une ouverture de mur ou de plafond ou d'une autre ouverture de maçonnerie ou de colombage,
**caractérisé en ce que**
l'élément isolant (1) conçu sous forme de bloc est pourvu de plusieurs éléments centraux (2 à 4) emboîtés les uns dans les autres, lesquels sont disposés à l'intérieur de l'élément isolant (1) de manière à pouvoir être retirés ou détachés et délimitent, avec leurs contours internes et/ou externes, plusieurs ouvertures de réception (9 à 11) ayant chacune des sections de passage différentes.

2. Élément isolant selon la revendication 1,
**caractérisé en ce que**
les ouvertures de réception (9 à 11) délimitées par les éléments centraux (2 à 4) sont disposées concentriquement les unes aux autres.

3. Élément isolant selon la revendication 1 ou 2,
**caractérisé en ce que**
les éléments centraux (2 à 4) sont conçus de telles sorte que, lorsqu'ils sont emboîtés les uns dans les autres, ils remplissent presque entièrement l'élément isolant (1).

4. Élément isolant selon l'une quelconque des revendications précédentes,
**caractérisé en ce que**
les sections de passage des ouvertures de réception (9 à 11) sont formées de manière circulaire et les éléments centraux (2 à 4) sont formés avec un contour interne et/ou externe circulaire correspondant.

5. Élément isolant selon l'une quelconque des revendications précédentes,
**caractérisé en ce que**
trois éléments centraux (2 à 4) sont prévus pour délimiter trois ouvertures de réception (9 à 11) de diamètres différents, dont les deux éléments centraux externes (3, 4) sont conçus sous forme de cylindre avec une section circulaire et l'élément central interne (2) est conçu sous forme de cylindre plein avec une section circulaire.

6. Élément isolant selon l'une quelconque des revendications précédentes,
**caractérisé en ce que**
les éléments centraux (2 à 4) sont séparés les uns des autres ou de l'élément isolant (1) par des coupures.

7. Élément isolant selon la revendication 6,
**caractérisé en ce que**
les coupures des éléments centraux externes (3, 4) s'étendent sur une circonférence essentielle des éléments centraux à l'exception d'au moins un segment de support sous forme de traverse exempte de coupure (7, 8).

8. Élément isolant selon la revendication 6 ou 7,
**caractérisé en ce que**
la coupure de l'élément isolant interne (2) s'étend sur toute la circonférence de l'élément central.

9. Élément isolant selon l'une quelconque des revendications 6 à 8,
**caractérisé en ce que**
les coupures s'étendent de part et d'autre des éléments centraux (2 à 4) de telle sorte que l'élément isolant est divisé en deux moitiés d'élément.

10. Élément isolant selon l'une quelconque des revendications 6 à 9,
**caractérisé en ce que**
les coupures sont réalisées à l'aide de scies ou de lames.

11. Élément isolant selon l'une quelconque des revendications 6 à 10,
**caractérisé en ce que**
les segments de support exempts de coupure (7, 8) sont marqués par des repères, de préférence des repères optiques et en particulier des repères réalisés par des moyens thermiques.

12. Élément isolant selon l'une quelconque des revendications précédentes,
**caractérisé en ce que**
les éléments centraux sont placés de manière centrale dans l'élément isolant.

13. Élément isolant selon l'une quelconque des revendications précédentes,
**caractérisé en ce que**
l'élément isolant (1) est fait de laine de roche.

14. Élément isolant selon l'une quelconque des revendications 1 à 12,
**caractérisé en ce que**
celui-ci est fait de fibres minérales solubles dans un milieu physiologique ayant la composition chimique suivante en pourcentage en poids :
| | | | |
|---|---|---|---|
| SiO₂ | 39% à 55% | de préférence | 40% à 52% |
| Al₂O₃ | 16% à 27% | de préférence | 16% à 26% |
| CaO | 9,5% à 20% | de préférence | 10% à 18% |
| MgO | 1% à 5% | de préférence | 1% à 4,9% |
| Na₂O | 0% à 15% | de préférence | 2% à 12% |
| K₂O | 0% à 15% | de préférence | 2% à 12% |
| R₂O (Na₂O + K₂O) | 10% à 14,7% | de préférence | 10% à 13,5% |
| P₂O₅ | 0% à 3% | en particulier | 0% à 2% |
| Fe₂O₃ (fer total) | 1,5% à 15% | en particulier | 3,2% à 8% |
| B₂O₃ | 0% à 2% | de préférence | 0% à 1% |
| TiO₂ | 0% à 2% | de préférence | 0,4% à 1% |
| Autre | 0% à 2,0% | | |

15. Élément isolant selon l'une quelconque des revendications précédentes,
**caractérisé en ce que**
la densité apparente de l'élément isolant, éléments centraux (2 à 4) compris, se situe dans la gamme de 60 à 140 kg/m³, en étant de préférence supérieure ou égale à 80 kg/m³.

16. Élément isolant selon l'une quelconque des revendications précédentes,
**caractérisé en ce que**
la teneur en liant (à sec) est inférieure à 3,5%, de préférence inférieure à 2,5%.

17. Élément isolant selon l'une quelconque des revendications précédentes,
**caractérisé en ce que**
les ouvertures de réception présentent un diamètre de 130, 150 et 180 mm.

18. Élément isolant selon l'une quelconque des revendications précédentes,
**caractérisé en ce que**
l'élément isolant (1) est conçu sous forme de bloc rectangulaire.

19. Élément isolant selon l'une quelconque des revendications précédentes,
**caractérisé en ce que**
l'élément isolant (1) est composé de deux moitiés d'élément isolant (1', 1"), dans lesquelles les éléments centraux (2 à 4) sont formés par des moitiés d'élément central (2', 3', 4' ; 2", 3", 4").

20. Élément isolant selon l'une quelconque des revendications précédentes,
**caractérisé en ce que**
les faces frontales de l'élément isolant (1) sont pourvues d'une couche support ayant une affinité pour le crépi.

21. Système pour isoler des passages de tuyaux de cheminées à l'aide d'ouvertures ou d'ouvertures dans des murs, des plafonds ou autres ouvrages de maçonnerie ou colombages, comprenant un élément isolant sous forme de bloc (1) selon l'une quelconque des revendications précédentes.
